(19) Europäisches Patentamt / European Patent Office / Office européen des brevets

(11) **EP 3 696 405 B1**

(12) **EUROPEAN PATENT SPECIFICATION**

(45) Date of publication and mention
of the grant of the patent:
**22.03.2023 Bulletin 2023/12**

(21) Application number: **19211881.8**

(22) Date of filing: **27.11.2019**

(51) International Patent Classification (IPC):
**F03D 7/04** *(2006.01)* **F03D 80/50** *(2016.01)*
**F03D 17/00** *(2016.01)*

(52) Cooperative Patent Classification (CPC):
**F03D 7/048; F03D 7/042; F03D 17/00; F03D 80/50**

(54) **OPERATING STATE EVALUATION METHOD AND OPERATING STATE EVALUATION DEVICE**

BETRIEBSZUSTANDSBEWERTUNGSVERFAHREN UND
BETRIEBSZUSTANDSBEWERTUNGSVORRICHTUNG

PROCÉDÉ ET DISPOSITIF D'ÉVALUATION D'ÉTAT DE FONCTIONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.02.2019 JP 2019024353**
**09.05.2019 JP 2019089031**

(43) Date of publication of application:
**19.08.2020 Bulletin 2020/34**

(73) Proprietor: **Mitsubishi Heavy Industries, Ltd.**
**Tokyo 1008332 (JP)**

(72) Inventors:
• **SHINKAWA, Eriko**
**Tokyo, 1008332 (JP)**
• **HAYASHI, Kentaro**
**Tokyo, 1008332 (JP)**
• **YUGE, Atsushi**
**Tokyo, 1008332 (JP)**
• **HASHIMOTO, Masayuki**
**Tokyo, 1008332 (JP)**
• **IKAWA, Yoshikatsu**
**Tokyo, 1008332 (JP)**
• **NAKANO, Takahiro**
**Tokyo, 1008332 (JP)**

(74) Representative: **Henkel & Partner mbB**
**Patentanwaltskanzlei, Rechtsanwaltskanzlei**
**Maximiliansplatz 21**
**80333 München (DE)**

(56) References cited:
**EP-A2- 3 252 556** **WO-A1-2009/016020**
**US-A1- 2010 138 182** **US-A1- 2010 179 773**

## Description

### TECHNICAL FIELD

This disclosure relates to a method and a device for evaluating an operating state of a wind turbine facility.

### BACKGROUND ART

The operating state of a facility can be monitored by acquiring an actual value of a parameter to be monitored from the operating facility and comparing the actual value with a predetermined criterion threshold. In this case, if the acquired actual value exceeds the threshold, the operating state is judged to be abnormal.

Patent Document 1 provides an example of monitoring the operating state of a facility. In Patent Document 1, the monitoring target is a main shaft bearing which supports a main shaft provided with blades in a wind power generating apparatus. A load acting on the main shaft bearing is detected, and the state of the main shaft bearing is evaluated based on the magnitude of the load and is used for predicting the timing of maintenance, for instance.

### Citation List

### Patent Literature

Patent Document 1: JP2010-159710A
Patent Document 2: US 2010/179773 A1
Patent Document 3: US 2010/138182 A1
Patent Document 4: WO 2009/016020 A1
Patent Document 5: EP 3 252 556 A2

### SUMMARY

The threshold used for monitoring the operating state is set with some margin, assuming various operating states that may occur in the facility. For instance, in a case where a bearing is monitored as in Patent Document 1, since the temperature of cooling oil supplied to the bearing changes according to the on/off state of a cooler disposed in a supply channel of the cooling oil, it is difficult to detect an increase in temperature depending on the operating state of the cooler even when the temperature is assumed to rise due to an abnormality in the bearing. Taking into consideration such characteristics, a threshold has to be set with a large margin in order to accurately detect the abnormality. On the other hand, if the threshold has a large margin, it is difficult to detect an abnormality at the moment when the temperature of the bearing starts to rise, and it is difficult to determine the abnormality at an early stage.

Further, the wind power generating apparatus as disclosed in Patent Document 1 is installed outside and thus is easily affected by an external environment. In particular, since the ambient temperature changes due to seasonal fluctuations, the threshold used for monitoring the operating state of the wind power generating apparatus has to take a large margin in consideration of the influence of such an external environment. Therefore, it is difficult to detect the abnormality at an early stage.

At least one embodiment of the present invention was made in view of the above circumstances, and an object thereof is to provide an operating state evaluation method and an operating state evaluation device that can accurately and early detect an abnormality by criteria in accordance with the operating state of a facility.

Accordingly, there is provided a method for evaluating an operating state of a wind turbine facility as set out in independent claim 1, and a device for evaluating an operating state of a wind turbine facility as set out in independent claim 11. Advantageous developments are defined in the dependent claims.

(1) To solve the above problem, an operating state evaluation method according to at least one embodiment of the present invention for evaluating an operating state of a wind turbine facility including at least one wind turbine comprises: a step of acquiring an operating condition of the wind turbine facility or the at least one wind turbine; a step of calculating an estimated value of a physical quantity measurable on the at least one wind turbine and corresponding to the operating condition; a step of acquiring an actual value corresponding to the physical quantity; and a step of determining whether an abnormality is present in the at least one wind turbine by comparing the estimated value and the actual value.

With the above method (1), by comparing the estimated value calculated according to the operating condition with the actual value, it is possible to determine the presence of abnormality based on a criterion corresponding to the operating condition. Therefore, compared with determination using a criterion set uniformly regardless of the operating condition, a detailed abnormality determination can be performed, and the operating state can be accurately and early evaluated.

(2) In some embodiments, in the above method (1), the estimated value is calculated by inputting the operating condition as an input parameter to a physical model of the wind turbine facility or the at least one wind turbine.

With the above method (2), the estimated value corresponding to the operating condition can be calculated using a physical model.

(3) In some embodiments, in the above method (1), the estimated value is calculated by inputting the operating condition as an input parameter to a machine learning model of the wind turbine facility or the at least one wind turbine.

With the above method (3), the estimated value corresponding to the operating condition can be calculated using a machine learning model.

(4) In some embodiments, in any one of the above methods (1) to (3), the at least one wind turbine includes a plurality of wind turbines, and the operating condition is obtained by averaging parameters acquired from each of the plurality of wind turbines.

With the above method (4), by averaging parameters acquired from each of the plurality of wind turbines and using the average as the operating condition, it is possible to reduce the influence of a random disturbance factor that may be input to a specific wind turbine, and it is possible to achieve more reliable evaluation.

(5) In some embodiments, in the above method (1), the at least one wind turbine includes a plurality of wind turbines, and the estimated value is obtained by applying statistical processing to the actual value acquired from each of the plurality of wind turbines.

With the above method (5), the estimated value corresponding to the operating condition can be calculated by applying statistical processing to the actual value acquired from each of the plurality of wind turbines.

(6) In some embodiments, in the above method (5), the estimated value is an average of the actual value acquired from each of the plurality of wind turbines.

With the above method (6), by using the average of the actual values of the plurality of wind turbines as the estimated value corresponding to the operating condition, it is possible to achieve simple and reliable evaluation.

(7) In some embodiments, in any one of the above methods (1) to (6), a difference between the estimated value and the actual value is calculated, and it is determined whether an abnormality is present based on whether the difference exceeds a threshold.

With the above method (7), by using the difference between the estimated value and the actual value as the evaluation parameter, it is possible to quantitatively evaluate deviation of the actual value due to an abnormality, and it is possible to accurately identify a wind turbine having an abnormality.

(8) In some embodiments, in any one of the above methods (1) to (7), the at least one wind turbine includes a plurality of wind turbines, and the method includes a step of identifying a wind turbine having an abnormality by comparison in behavior of the actual value with respect to the operating condition among the plurality of wind turbines.

With the above method (8), since a wind turbine having an abnormality exhibits different behavior of the actual value against the estimated value, by comparing behaviors of the actual value of each wind turbine against the estimated value, it is possible to accurately identify a wind turbine having an abnormality.

(9) In some embodiments, in the above method (8), a correlation coefficient between the estimated value and the actual value is obtained for each of the plurality of wind turbines, and a wind turbine whose correlation coefficient exceeds a threshold is determined to have an abnormality.

With the above method (9), by using the correlation coefficient between the estimated value and the actual value as the evaluation parameter, it is possible to quantitatively evaluate deviation of the actual value due to an abnormality, and it is possible to accurately identify a wind turbine having an abnormality.

(10) In some embodiments, in any one of the above methods (1) to (9), the at least one wind turbine includes a plurality of wind turbines, and the method further includes: a step of calculating an abnormality degree of each of the plurality of wind turbines, based on the operating condition of each of the wind turbines; a step of determining whether an abnormality is present in each of the plurality of wind turbines, based on the abnormality degree of each of the wind turbines, and a step of, if at least one of the plurality of wind turbines is determined to have an abnormality, verifying an abnormality positive determination that the at least one of the plurality of wind turbines has the abnormality. The step of verifying the abnormality positive determination includes: a step of acquiring a determination result regarding one or more other of the plurality of wind turbines based on the abnormality degree, in a predetermined period including a timing of acquiring the operating condition used for calculating the abnormality degree based on which the abnormality positive determination is made, and a step of making a first validity determination whether the abnormality positive determination is valid, based on the number of wind turbines that are determined to be abnormal based on the abnormality degree among the one or more other of the plurality of wind turbines.

For instance, there is a technique of detecting an abnormality of each of a plurality of wind turbines by calculating an abnormality degree based on multiple sensor values (operating condition) detected from multiple sensors disposed on each wind turbine and comparing the abnormality degree with a threshold (abnormality determination threshold). In such a technique, if detection sensitivity is increased by, for instance, setting the threshold low in order to detect an abnormality at an early stage before the wind turbine fails, although the occurrence of failure of the wind turbine can be more reliably prevented, false detection may occur, such as false abnormality detection when the abnormality degree temporarily exceeds the threshold due to an external environmental factor. If the wind turbine in which an abnormality is detected is stopped for inspection, the operating rate of the wind turbine decreases as the number of false detections increases.

With the above method (10), if at least one of the plurality of wind turbines is determined to have an abnormality based on the abnormality degree calculated based on the operating condition (multiple parameter values), the validity (accuracy) of that abnormality positive determination is verified based on the number of abnormality positive determinations in the determination result regarding the other wind turbines based on the abnormality degree at the same timing. By ignoring the abnormality positive determination that is determined to be false on the verification, it is possible to early detect a sign of an abnormality occurring in each wind turbine with an increased detection sensitivity while avoiding false detection based on the abnormality degree of each wind turbine. Accordingly, it is possible to prevent a reduction in operating rate due to false detection and an increase in cost.

(11) In some embodiments, in the above method (10), the step of making the first validity determination includes determining that the abnormality positive determination is invalid if the number is less than a first verification threshold, and determining that the abnormality positive determination is valid if the number is not less than the first verification threshold.

With the above method (11), it is possible to appropriately judge the validity of the abnormality positive determination.

(12) In some embodiments, the above method (10) or (11) further comprises a step of notifying that the abnormality is detected if the abnormality positive determination is determined to be valid.

With the above method (12), if the abnormality positive determination of each wind turbine is determined to be invalid (false detection), the abnormality positive determination is not adopted. Conversely, if the abnormality positive determination is determined to be valid, a monitor is notified, for instance. Thus, it is possible to avoid the notification of false detection and the need for response to this notification such as inspection.

(13) In some embodiments, in any one of the above methods (1) to (12), the at least one wind turbine includes a plurality of wind turbines, and the method further includes: a step of calculating an abnormality degree of each of the plurality of wind turbines, based on the operating condition of each of the wind turbines; a step of determining whether an abnormality is present in each of the plurality of wind turbines, based on the abnormality degree of each of the wind turbines, and a step of, if at least one of the plurality of wind turbines is determined not to have an abnormality, verifying an abnormality negative determination that the at least one of the plurality of wind turbines does not have an abnormality. The step of verifying the abnormality negative determination includes: a step of calculating a statistic of the abnormality degree of each of the plurality of wind turbines; a step of calculating a relationship between the abnormality degree of each of the plurality of wind turbines and the statistic; and a step of a making a second validity determination whether the abnormality negative determination is valid for each of the wind turbines, based on the relationship.

For instance, as described above, if detection sensitivity is decreased by, for instance, increasing the threshold to detect an abnormality of each of the plurality of wind turbines based on comparison between the abnormality degree and the threshold (abnormality determination threshold), although false detection can be reduced, it is difficult to early detect an abnormality (sign of abnormality) before each wind turbine fails. For instance, even if the abnormality degree gradually increases due to an abnormality occurring in the wind turbine, if the value of the abnormality degree is not more than the threshold, an abnormality cannot be detected, and a sign of abnormality cannot be accurately obtained. Further, as abnormality detection is delayed, a risk of failure of the wind turbine increases, and the operating rate of the wind turbine may decrease due to the failure.

With the above method (13), if at least one of the plurality of wind turbines is determined not to have an abnormality based on the abnormality degree calculated based on the operating condition (multiple parameter values), the validity (accuracy) of that abnormality negative determination is verified based on the statistic calculated from the plurality of abnormality degrees at the same timing. Thus, even if the abnormality degree is not more than the threshold, it is possible to early detect an abnormality, and it is possible to prevent a reduction in operating rate due to failure of the wind turbine and an increase in cost.

(14) In some embodiments, the above method (13) further comprises a step of issuing notification if the abnormality negative determination is determined to be invalid.

With the above method (14), if the abnormality negative determination of each wind turbine is determined to be invalid, for instance, a monitor is notified of abnormality positive determination. Thus, it is possible to more appropriately detect an abnormality.

(15) In some embodiments, in the above method (13) or (14), the statistic is an average of the abnormality degree of the plurality of wind turbines.

With the above method (15), it is possible to appropriately judge the validity of the abnormality negative determination.

(16) In some embodiments, in any one of the above methods (13) to (15), the relationship is a deviation between the abnormality degree of each wind turbine and the statistic.

With the above method (16), it is possible to appropriately judge the validity of the abnormality negative determination, based on the deviation between the abnormality degree and the statistic (e.g., average).

(17) In some embodiments, in any one of the above methods (13) to (16), the step of making the second validity determination includes determining that each wind turbine is abnormal if the relationship is not less than a second verification threshold, and determining that each wind turbine is normal if the relationship is less than the second verification threshold.

With the above method (17), it is possible to appropriately judge the validity of the abnormality negative determination.

(18) In some embodiments, in any one of the above methods (13) to (17), the step of verifying the abnormality negative determination includes verifying the abnormality negative determination if none of the plurality of wind turbines is determined to have an abnormality.

With the above method (18), the abnormality negative determination is verified if none of the plurality of wind turbines is determined to have an abnormality. Thus, the same effect is achieved as in the above (13) to (17).

(19) In some embodiments, in any one of the above methods (1) to (9), the at least one wind turbine includes a plurality of wind turbines, and the method further includes: a step of calculating an abnormality degree of each of the plurality of wind turbines, based on the operating condition of each of the wind turbines; a step of, if at least one of the plurality of wind turbines is determined to have an abnormality based on the abnormality degree, verifying the determination based on the abnormality degree of the other of the plurality of wind turbines at a timing of acquiring the operating condition, and a step of, if at least one of the plurality of wind turbines is determined not to have an abnormality based on the abnormality degree, verifying the determination based on a strength of relevance between a statistic calculated from the abnormality degree of each of the plurality of wind turbines at a timing of acquiring the operating condition and the abnormality degree of the at least one of the plurality of wind turbines that is determined not to have an abnormality.

With the above method (19), the determination result regarding the presence or absence of abnormality in each wind turbine based on the abnormality degree is verified for both cases where the wind turbine is determined to have an abnormality and not to have an abnormality. Thus, the same effect is achieved as in the above (10) and (13).

(20) To solve the above problem, an operating state evaluation device according to at least one embodiment of the present invention for evaluating an operating state of a wind turbine facility including at least one wind turbine comprises: an operating condition acquisition part configured to acquire an operating condition of the wind turbine facility or the at least one wind turbine; an estimated value calculation part configured to calculate an estimated value of a physical quantity measurable on the at least one wind turbine and corresponding to the operating condition; an actual value acquisition part configured to acquire an actual value corresponding to the physical quantity; and a determination part configured to determine whether an abnormality is present in the at least one wind turbine by comparison between the estimated value and the actual value.

With the above configuration (20), by comparing the estimated value calculated according to the operating condition with the actual value, it is possible to determine the presence of abnormality based on a criterion corresponding to the operating condition. Therefore, compared with determination using a criterion set uniformly regardless of the operating condition, a detailed abnormality determination can be performed, and the operating state can be accurately and early evaluated.

(21) In some embodiments, in the above configuration (20), the at least one wind turbine includes a plurality of wind turbines, and the device further includes: a calculation part configured to calculate an abnormality degree of each of the plurality of wind turbines, based on the operating condition of each of the wind turbines; and a verification part configured to, if at least one of the plurality of wind turbines is determined to have an abnormality based on the abnormality degree, verify the determination based on the abnormality degree of the other of the plurality of wind turbines at a timing of acquiring the operating condition and further configured to, if at least one of the plurality of wind turbines is determined not to have an abnormality based on the abnormality degree, verify the determination based on a strength of relevance between a statistic calculated from the abnormality degree of each of the plurality of wind turbines at a timing of acquiring the operating condition and the abnormality degree of the at least one of the plurality of wind turbines that is determined not to have an abnormality.

With the above configuration (21), the same effect is achieved as in the above (19).

At least one embodiment of the present invention provides an operating state evaluation method and an operating state evaluation device that can accurately and early detect an abnormality by criteria in accordance with the operating state of the facility.

BRIEF DESCRIPTION OF DRAWINGS

FIG. 1 is an overall configuration diagram of a wind turbine facility.
FIGs. 2 are a schematic diagram of a wind turbine of FIG. 1.
FIG. 3 is a block diagram showing an interior configuration and a surrounding configuration of a control unit.
FIG. 4 is a flowchart showing steps of an operating state evaluation method according to at least one embodiment of the present invention.
FIG. 5 is a schematic diagram of a physical model used in an estimated value calculation part.
FIG. 6 is verification result showing estimated values calculated based on an operating condition and actual values regarding the temperature of a bearing, plotted against the output power of a wind turbine.

FIG. 7 is verification result in which estimated values calculated by an estimated value calculation part and actual values acquired by an actual value acquisition part regarding the temperature of a bearing are plotted for each operating condition.

FIG. 8 is a block diagram showing an interior configuration and a surrounding configuration of a control unit that includes a first verification part and a second verification part.

FIG. 9 is a flowchart showing an operating state evaluation method according to another embodiment of the present invention.

FIG. 10 is a diagram for describing an example of determination by a first verification step according to an embodiment of the present invention.

FIG. 11 is a diagram for describing an example of determination by a second verification step according to an embodiment of the present invention.

DETAILED DESCRIPTION

Embodiments of the present invention will now be described with reference to the accompanying drawings. It is intended, however, that unless particularly specified, dimensions, materials, shapes, relative positions and the like of components described in the embodiments shall be interpreted as illustrative only and not intended to limit the scope of the present invention.

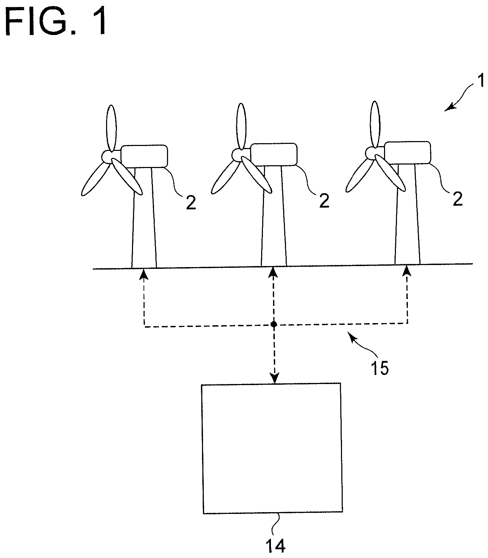

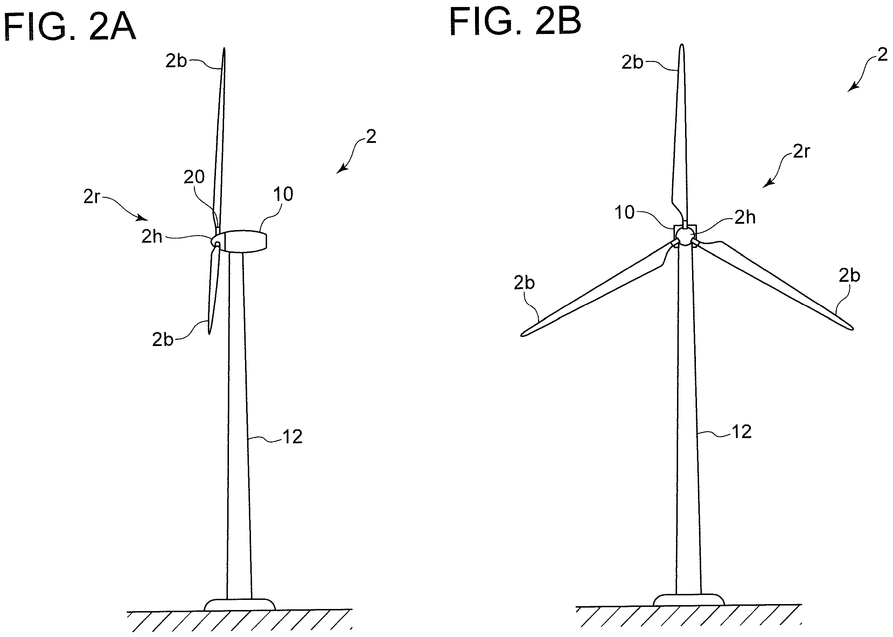

FIG. 1 is an overall configuration diagram of a wind turbine facility 1. FIGs. 2 are a schematic diagram of a wind turbine 2 of FIG. 1. FIG. 2A is a side view of the wind turbine 2, and FIG. 2B is a front view of the wind turbine 2.

The wind turbine facility 1 includes at least one wind turbine 2. As shown in FIG. 2, the wind turbine 2 includes a rotor 2r having at least one wind turbine blade 2b and a hub 2h with the wind turbine blade 2b mounted thereto, a nacelle 10, and a tower 12 supporting the nacelle 10. In this example, the wind turbine 2 has three wind turbine blades 2b mounted to the hub 2h, and is configured such that as wind acts on the wind turbine blades 2b, the rotor 2r including the wind turbine blades 2b and the hub 2h rotates about the rotational axis of the rotor 2r.

The wind turbine 2 may be a wind power generating apparatus. In this case, the nacelle 10 may accommodate a generator and a power transmission mechanism for transmitting rotation of the rotor 2r to the generator and may be configured such that rotational energy transmitted to the generator via the power transmission mechanism from the rotor 2r is converted into electric energy by the generator.

The wind turbine facility 1 forms a so-called wind farm composed of at least one wind turbine 2 disposed in a predetermined area. In the example of FIG. 1, the wind turbine facility 1 includes a plurality of wind turbines 2 disposed in a predetermined area. The plurality of wind turbines 2 has the same specification (same type) and is managed by a control unit 14. The control unit 14 includes an electronic arithmetic device such as a computer and is connected to each of the wind turbines 2 via a communication line 15 for transmitting and receiving various data to control the operating state of the wind turbine facility 1.

One of the primary functions of the control unit 14 is to acquire a parameter related to the operating state of the wind turbine facility 1 and the at least one wind turbine 2 and monitor the operating state. The parameter related to the operating state includes various physical quantities indicating the operating state of the wind turbine facility 1 or the wind turbine 2. For instance, the parameter may be a physical parameter defining the operating state (e.g., output power of the wind turbine 2, ambient temperature, temperature in a specific location, pressure (oil pressure), current) or may be an electrical signal or an instruction (e.g., operating information) transmitted to and/or from the wind turbine facility 1 or the wind turbine 2 for control. Further, the parameter may be acquired from the entire wind turbine facility 1, or may be acquired from each wind turbine 2 constituting the wind turbine facility 1, or may be acquired from a part of the wind turbines 2.

Evaluation of the operating state of the wind turbine facility 1 having the above configuration will be described. In the following, a case where an operating state evaluation method according to at least one embodiment of the present invention is performed by an operating state evaluation device configured by installing a predetermined program on the control unit 14 will be described. Such an operating state evaluation device may be configured by installing a program for executing an operating state evaluation method described later on the control unit 14.

The program may be installed on the electronic arithmetic device by reading a storage medium previously storing the program by a predetermined reader. The storage medium storing the program and the program itself are also included in the present invention.

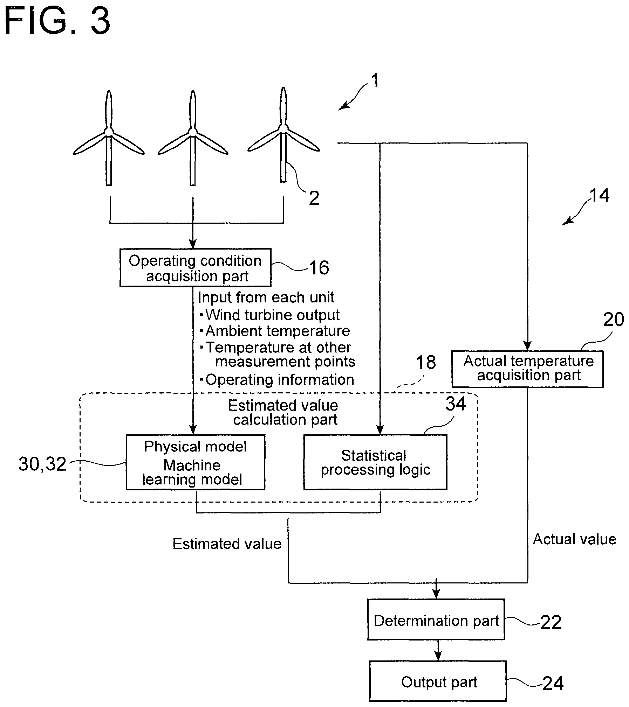

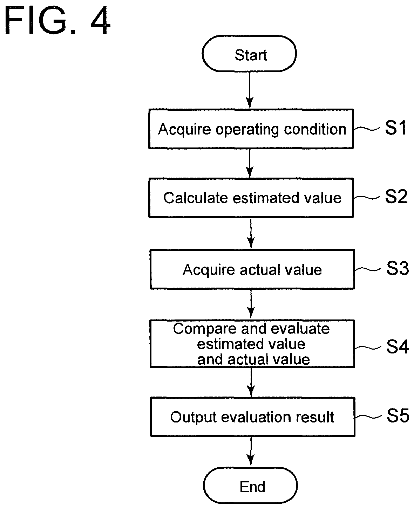

FIG. 3 is a block diagram showing an interior configuration and a surrounding configuration of the control unit 14. FIG. 4 is a flowchart showing steps of the operating state evaluation method according to at least one embodiment of the present invention.

As shown in FIG. 3, the control unit 14 includes an operating condition acquisition part 16, an estimated value calculation part 18, an actual value acquisition part 20, a determination part 22, and an output part 24. In FIG. 3, among the interior configuration of the control unit 14, components related to the operating state evaluation method according to at least one embodiment of the present invention are representatively shown as functional blocks. The control unit 14 may have other functional blocks. The functional blocks shown in FIG. 3 may be integrated or further divided.

When the wind turbine facility 1 is operating, the operating condition acquisition part 16 acquires an operating condition of the wind turbine facility 1 or the at least one wind turbine 2 (step S1). That is, the operating condition acquisition target may be the wind turbine facility 1 or may be the wind turbine 2 constituting the wind turbine facility 1. In the latter case, if the wind turbine facility 1 includes a plurality of wind turbines 2, the operating condition acquisition target may be all of the wind turbines 2 or may be a part of the wind turbines 2.

The operating state acquired by the operating condition acquisition part 16 includes any parameter related to the operating state of the wind turbine facility 1 or the at least one wind turbine 2. That is, as described above, parameters that can be acquired by the control unit 14 from the wind turbine facility 1 or the at least one wind turbine 2 are used as the operating condition. The parameters constituting the operating condition may be acquired by various sensors disposed on the wind turbine facility 1 or the wind turbine 2, or may be various electrical signals transmitted between the wind turbine facility 1, the wind turbine 2, and the control unit 14.

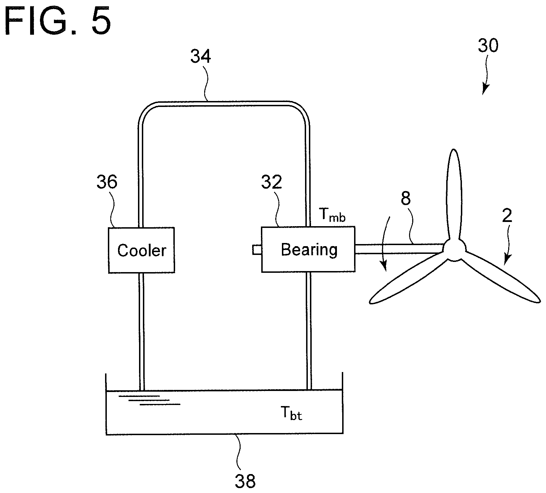

In the present embodiment, a case where the operating state of each wind turbine 2 is evaluated based on the temperature of a bearing 32 (see FIG. 5) will be described. Accordingly, the parameters constituting the operating condition include, for instance, the output power of the wind turbine 2, the ambient temperature, the temperature in a specific location, and operating information as parameters necessary for calculating an estimated value of the temperature of the bearing 32.

When the operating condition acquisition target is the wind turbine 2, the operating condition acquisition part 16 may acquire the operating condition from a single wind turbine 2, or may acquire the operating conditions from a plurality of wind turbines 2. Since the same type of wind turbines 2 are disposed in a predetermined area in the wind turbine facility 1, the operating conditions acquired from the respective wind turbines 2 are likely to have the same or similar values. Accordingly, by acquiring the operating conditions from the plurality of wind turbines 2, even if an improper operating condition is acquired from a specific wind turbine, the reliability of the operating condition acquired from each wind turbine 2 can be evaluated by comparison with a proper operating condition acquired from the other wind turbines 2. In this case, only operating conditions having enough reliability may be selected, or the operating conditions may be statistically treated (for instance, the operating conditions acquired from the wind turbines 2 may be averaged) regardless of reliability to reduce the influence of the improper operating condition.

In this case, the operating condition acquisition part 16 may obtain a final operating condition by acquiring individual operating conditions from the wind turbines 2 and averaging parameters included in these operating conditions. In this case, since an average of the parameters of the wind turbines 2 is used as the operating condition, it is possible to acquire the operating condition with a reduced influence of a random disturbance factor that may be input to a specific wind turbine.

Further, even when the operating condition is acquired from a single wind turbine 2, the operating condition acquisition part 16 may acquire the operating condition time-sequentially and apply statistical processing such as averaging to the acquired data to obtain an operating condition with higher reliability than an operating condition that is instantaneously acquired.

Then, the estimated value calculation part 18 calculates an estimated value of a physical quantity to be evaluated (step S2). As the physical quantity, a physical quantity that can be measured on the wind turbine facility 1 or the at least one wind turbine 2 (physical quantity that can be compared with an actual value acquired by the actual value acquisition part 20) is selected. The estimated value calculation part 18 acquires the operating condition from the operating condition acquisition part 16 and calculates an estimated value corresponding to the operating condition. The calculation of the estimated value is performed based on estimation logic that associates the operating condition with the estimated value (i.e., estimation logic where the operating condition is an input parameter, and the estimated value is an output parameter).

The estimation logic may include at least one of a physical model of the estimation target (wind turbine facility 1 or at least one wind turbine 2), a machine learning model, or a statistical processing logic, for instance. The estimation logic may be stored in a storage device 26 such as a memory or a hard disc in advance, and may be readable by the estimated value calculation part 18.

The physical model is a model constructed by simulating the estimation target based on its physical characteristics such that the estimated value is output as the output parameter when the operating condition is input as the input parameter.

The operating condition input in the physical model may be one operating condition or may be multiple operating conditions. That is, in a case where the wind turbine facility 1 includes a plurality of wind turbines 2, and the operating condition acquisition part 16 acquires the operating condition from each of the plurality of wind turbines 2, the estimated value may be calculated by inputting each operating condition acquired from the plurality of wind turbines 2 to the physical model.

Here, an example of the physical model used in the estimated value calculation part 18 will be specifically described with reference to FIG. 5. FIG. 5 is a schematic diagram of a physical model 30 used in the estimated value calculation part 18. The physical model 30 is a thermal equilibrium model related to a cooling oil supply structure for the bearing 32 that rotatably supports the rotor 2r of the wind turbine 2. The physical model 30 includes the bearing 32 rotatably supporting the rotor 2r of the wind turbine 2, and a circulation channel 34 through which cooling oil supplied to the bearing 32 circulates. On the circulation channel 34, a cooler 36 comprising a heat exchanger for cooling the cooling oil and a reservoir 38 for storing the cooling oil are disposed.

In the physical model 30, the heat balance of the bearing 32 is represented by the following expression, using the amount of heat $J_{in}$ [kJ] generated in the bearing 32 and the amount of heat $J_{out}$ [kJ] cooled by the cooler 36:

$$J_{in} - J_{out} = H_{total} \times (T_{bt} - T_a) \quad (1)$$

The parameters used in the expression (1) are as follows:

$H_{total}$: heat capacity [kJ/C°] of entire system
$T_{bt}$: temperature [C°] of bearing 32
$T_a$: ambient temperature [C°]

The amount of heat $J_{in}$ [kJ] generated by rotation of the wind turbine 2 and the amount of heat $J_{out}$ [kJ] cooled by the cooler 36 are represented by the following expressions, respectively:

$$J_{in} = K1 \times M \times n \times t_{run} \quad (2\text{-}1);$$

$$J_{out} = C_{cool} \times (T_{bt} - T_a) \times t_{cool} \quad (2\text{-}2)$$

The parameter used in the expressions (2-1) and (2-2) are as follows:

K1 : proportionality constant of amount of generated heat to friction in bearing 32 [-]
M: friction moment of bearing 32 [Nmm]
n: rotational speed of bearing 32 [rpm]
$t_{run}$: running time of wind turbine 2 [sec]
$C_{cool}$: cooling performance of cooler 36 [kW/C°]
$t_{cool}$: running time of cooler 36 [sec]

In the physical model 30 defined by the expressions (1), (2-1), and (2-2), by inputting the input parameters (heat capacity $H_{total}$ of entire system, ambient temperature $T_a$, proportionality constant K1, friction moment M, rotational speed n, wind turbine running time $t_{run}$, cooling performance $C_{cool}$ of cooler, cooler running time $t_{cool}$) acquired as the operating condition, the remaining parameter, i.e., the temperature $T_{bt}$ of the bearing 32 is calculated as the estimated value.

The estimated value calculation part 18 may use a machine learning model instead of the physical model. In this case, the machine learning model can calculate an estimated value corresponding to any operating condition by repeatedly learning a relationship between the operating condition and the estimated value using a predetermined algorithm. The machine learning model applicable to the estimated value calculation part 18 may be any known model and is not described in detail herein.

Alternatively, the estimated value calculation part 18 may calculate the estimated value using a statistical processing logic instead of the physical model and the machine learning model. In a case where a plurality of actual values of the physical quantity corresponding the estimated value can be acquired, the statistical processing model calculates the estimated value by applying statistical processing to the plurality of actual values. The simplest statistical processing is, for instance, averaging or calculation of the median or mode. For instance, in a case where the wind turbine facility 1 includes a plurality of wind turbines 2, to calculate the estimated value of the wind turbine output power under a certain operating condition, an actual value of the output power of each wind turbine 2 is acquired, and an average of the actual values is calculated as the estimated value.

Then, the actual value acquisition part 20 acquires an actual value corresponding to the estimated value calculated by the estimated value calculation part 18 (step S3). For instance, in a case where the estimated value of the temperature of the bearing 32 is calculated using the physical model 30 shown in FIG. 5, a temperature sensor (not shown) is provided to the bearing 32 to be estimated, and the actual value acquisition part 20 acquires the actual value by obtaining a detection signal from the temperature sensor. The method of acquiring the actual value may be any method, and any method according to the form of the actual value can be used.

The determination part 22 determines whether an abnormality is present in the estimation target by comparison between the estimated value calculated by the estimated value calculation part 18 and the actual value acquired by the actual value acquisition part 20 (step S4). Thus, by comparing the estimated value calculated according to the operating condition with the actual value, the determination part 22 can determine the presence of an abnormality based on a criterion corresponding to the operating condition. Therefore, compared with determination using a criterion set uniformly regardless of the operating condition, a detailed abnormality determination can be performed, and the operating state can be accurately and early evaluated.

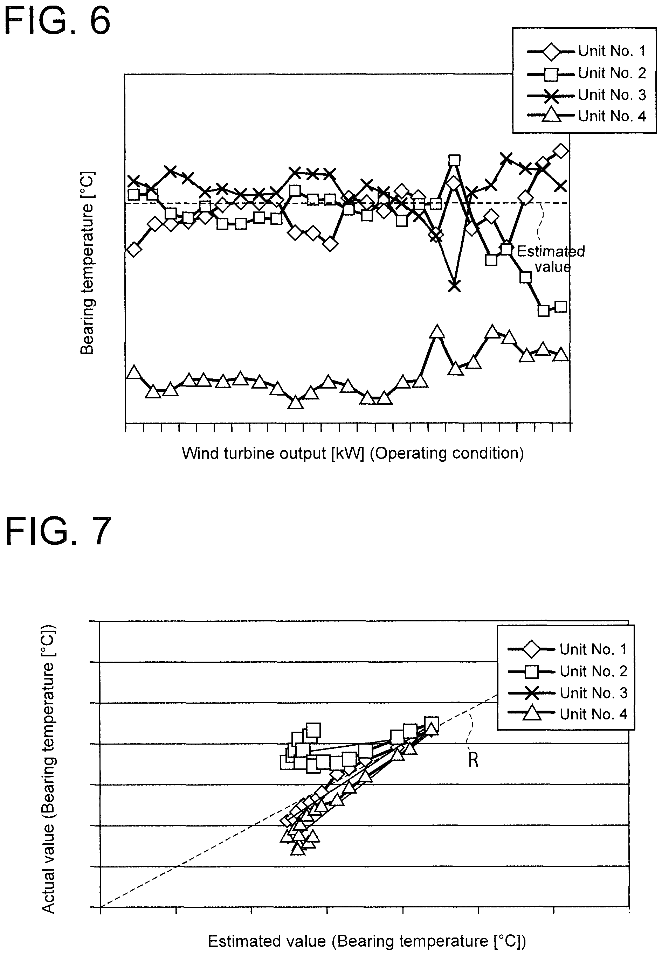

The determination part 22 may calculate a difference between the estimated value and the actual value and determine whether an abnormality is present based on whether the difference exceeds a threshold. FIG. 6 is verification result showing estimated values calculated based on the operating condition and actual values regarding the temperature of the bearing 32, plotted against the output power of the wind turbine 2 (output power of the generator accommodated in the nacelle 10). In this example, the wind turbine facility 1 includes four wind turbines 2 (unit No. 1 to unit No. 4) of the same type disposed in a predetermined area, and the change in temperature of the bearing 32 against the output power of the wind turbine 2 is shown for each wind turbine 2.

The estimated value of the temperature of the bearing 32 is a value calculated based on any of the physical model, the machine learning model, or the statistical processing logic, as described above. Accordingly, the actual value of a normal wind turbine 2 having no abnormality exhibits a similar tendency to the estimated value. Thus, the determination part 22 determines whether an abnormality is present by comparison between the actual value and the estimated value of each wind turbine 2.

For the abnormality determination, the determination part 22 may calculate a difference (difference of absolute values) between the estimated value and the actual value and determine whether an abnormality is present based on whether the difference exceeds a predetermined threshold. More specifically, the difference may be calculated by subtraction between the absolute value of the estimated value and the absolute value of the actual value (for example, difference = |estimated value| - |actual value|). In this case, in the example of FIG. 6, the differences of the units No. 1 to 3 are not more than the threshold while the difference of the unit No. 4 is more than the threshold. Thus, it is quantitatively determined that the unit No. 4 of the four wind turbines 2 has an abnormality.

Further, in the abnormality determination, the determination part 22 may identify a wind turbine having an abnormality by comparison in behavior of the actual value among a plurality of wind turbines. In a case where there is a plurality of wind turbines 2 that are equivalent to each other, the behaviors of the actual values of normal wind turbines 2 must be similar to each other. Herein, the behavior indicates, for instance, comparison with the actual values of the other wind turbines. On the other hand, if there are wind turbines 2 that are equivalent to each other but exhibit different behaviors in terms of the actual value, it is highly possible that an abnormality is present in the wind turbines 2. In the example of FIG. 6, since the unit No. 4 exhibits a different behavior from the units No. 1 to 3, the unit No. 4 is determined to have an abnormality. Thus, this method can identify a wind turbine 2 having an abnormality by relatively comparing behaviors of the actual values.

For the abnormality determination, the determination part 22 may obtain a correlation coefficient between the estimated value and the actual value for each of the plurality of wind turbines 2 and determine that a wind turbine 2 whose correlation coefficient exceeds a predetermined has an abnormality. The correlation coefficient $\gamma$ is calculated from the following expression, using the covariance $\sigma_{xy}^2$ of the estimated value and the actual value, the standard deviation $\sigma_x$ of the estimated value, and the standard deviation $\sigma_y$ of the actual value:

$$\gamma = \sigma_{xy}^2 / \sigma_x \sigma_y \quad (3)$$

The correlation coefficient is a value between -1 and +1. If an abnormality is present, the correlation coefficient approaches 0 since the estimated value deviates from the actual value. The threshold of the correlation coefficient may be obtained by calculating an average value of the correlation coefficient and the standard deviation of the plurality of wind turbines 2 and applying the following expression: average value ± constant × standard deviation (constant may be 3), for instance. FIG. 7 is verification result in which estimated values calculated by the estimated value calculation part 18 and actual values acquired by the actual value acquisition part 20 regarding the temperature of the bearing 32 are plotted for each operating condition. In a normal wind turbine 2 having no abnormality, since the estimated value coincides with the actual value, the correlation coefficient is high, and the data approximates the reference line R shown by the dotted line in FIG. 7. In contrast, in an abnormal wind turbine 2, the behavior fluctuates due to failure of the machine, and the estimated value is deviated from the actual value. As a result, the correlation coefficient is low, and the data is deviated from the reference line R shown by the dotted line in FIG. 7. In the present embodiment, by calculating the correlation coefficient and quantitatively evaluating the difference in tendency depending on the presence or absence of an abnormality, it is possible to accurately determine the presence or absence of an abnormality.

The determination result of the determination part 22 may be output to the outside by the output part 24 (step S5). The output part 24 may output the determination result to an external device by an electrical signal or may output the determination result in a form that appeals to an operator's sense. In the latter case, the output part 24 may be a display device. In this case, the display device may display an indicator of abnormality to notify the operator.

As described above, according to the present embodiment, comparing the estimated value calculated according to the operating condition with the actual value enables determination based on a criterion corresponding to the operating condition. Therefore, compared with determination using a criterion set uniformly regardless of the operating condition, a detailed abnormality determination can be performed, and the operating state can be accurately and early evaluated. Further, in case of the wind turbine facility 1 including a plurality of wind turbines 2 of the same type, by relatively comparing behaviors of the wind turbines 2, a more sensitive and precise evaluation can be performed than conventional evaluation using a criterion set uniformly regardless of the operating condition.

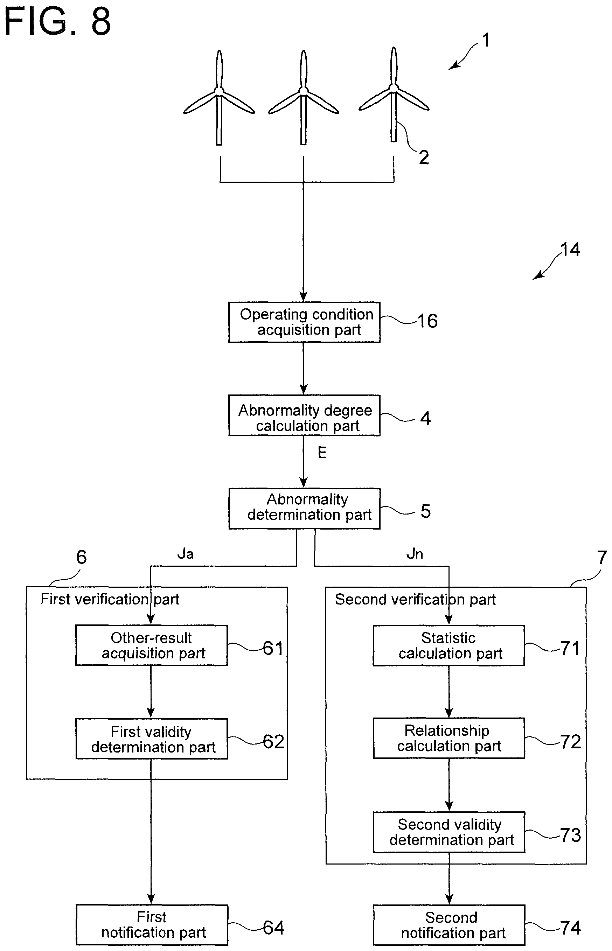

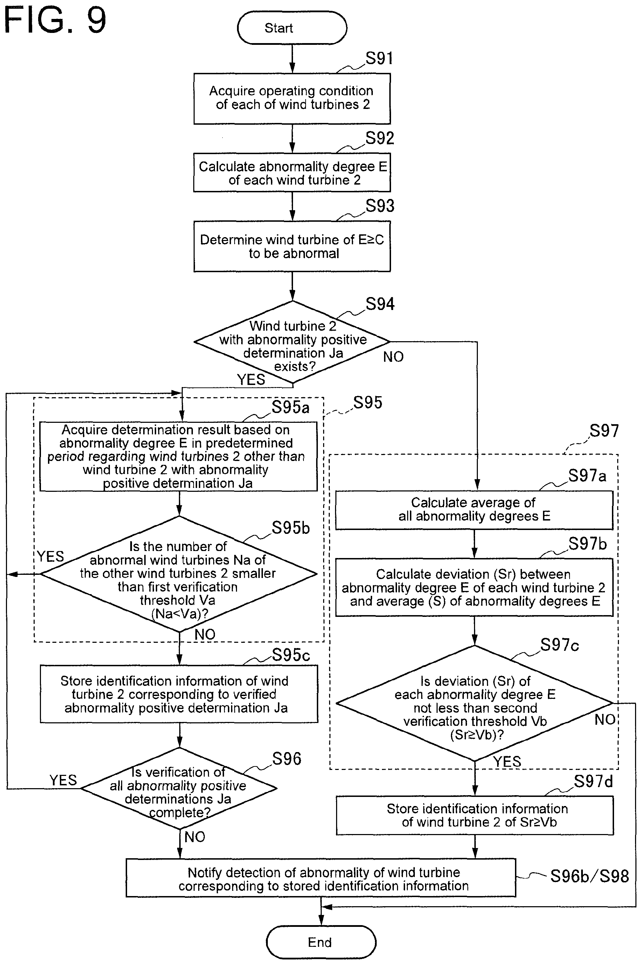

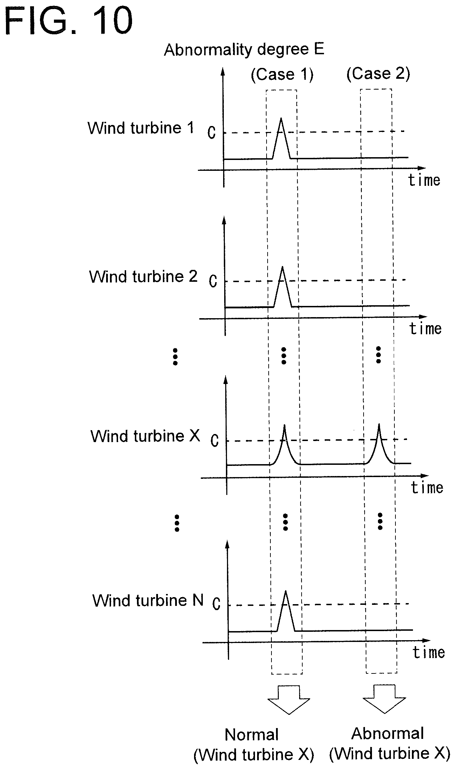

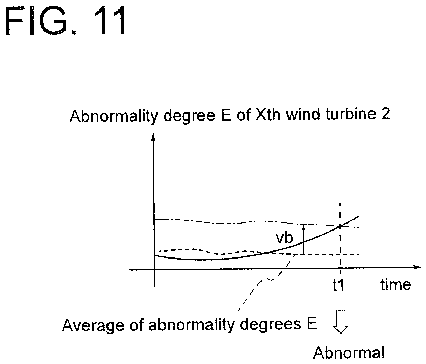

Embodiments for detecting an abnormality in each of a plurality of wind turbines 2 based on abnormality degree E of each wind turbine will be described with reference to FIGs. 8 to 11. FIG. 8 is a block diagram showing an interior configuration and a surrounding configuration of the control unit 14 according to an embodiment of the present invention, in which the control unit 14 includes a first verification part 6 and a second verification part 7. FIG. 9 is a flowchart showing the operating state evaluation method according to another embodiment of the present invention. FIG. 10 is a diagram for describing an example of determination by a first verification step (S95) according to an embodiment of the present invention. FIG. 11 is a diagram for describing an example of determination by a second verification step (S97) according to an embodiment of the present invention.

There are known techniques for detecting an abnormality based on abnormality degree E that can be calculated from multiple parameters (state quantities) such as sensor values of multiple sensors, for instance, Mahalanobis Taguchi method (MT method), one class support vector machine (OCSVM), k-neighbor method (kNN), and auto encoder. For instance, in the MT method, a normal group is defined as a unit space based on multivariate data stored as operating history, a distance (Mahalanobis distance) from the unit space to target data is measured, and the distance is compared with a threshold (abnormality determination threshold C) to determine an abnormality. With this method, it is possible to comprehensively diagnose each wind turbine 2 only with a single index, namely, the Mahalanobis distance. Further, compared with a technique which performs diagnosis based on whether each state quantity is below a control value, the MT method can detect an abnormality early before damage to devices progresses. By detecting such a sign of an abnormality, it is possible to prevent or minimize damage to devices in advance.

By applying such a technique to detect an abnormality of each wind turbine 2, it is possible to relatively easily monitor the operating state of each wind turbine 2 even with a number of parameters to be monitored. As previously described, the operating condition acquired from each wind turbine 2 may include detection values (sensor values) of multiple sensors (not shown). Accordingly, an abnormality degree E such as Mahalanobis distance may be calculated based on a group of sensor values (operating condition) detected at substantially the same timing from multiple sensors disposed on each wind turbine 2, and it may be determined whether an abnormality is present in each wind turbine 2 based on comparison between the abnormality degree E and the abnormality determination threshold C.

At this time, if detection sensitivity is increased by, for instance, setting the abnormality determination threshold C low in order to detect an abnormality at an early stage before the wind turbine 2 fails, although the occurrence of failure of the wind turbine 2 can be more reliably prevented, false detection may occur, such as false abnormality detection when the abnormality degree E temporarily exceeds the abnormality determination threshold C due to an external environmental factor. If the wind turbine 2 in which an abnormality is detected is stopped for inspection, the operating rate of the wind turbine 2 decreases as the number of false detections increases.

In view of this, in some embodiments, the control unit 14 may have a configuration to prevent false detection when abnormality detection for each of a plurality of wind turbines 2 is performed based on the abnormality degree E. More specifically, as shown in FIG. 8, the control unit 14 may further include an abnormality degree calculation part 4, an abnormality determination part 5, and a first verification part 6.

Each functional part will now be described.

The abnormality degree calculation part 4 calculates the abnormality degree E of each of a plurality of wind turbines 2 based on the operating condition of each wind turbine 2. The plurality of wind turbines 2 may be a part of all wind turbines 2 included in the wind turbine facility 1. Further, the plurality of wind turbines 2 may be two or more wind turbines 2 that are under or assumed to be under the same environmental conditions (e.g., wind conditions, temperature conditions), for instance, which are disposed close to each other geographically. The operating condition of each wind turbine 2 includes multiple parameters. Further, each parameter value is measured at a predetermined timing, for instance periodically, by a corresponding sensor (not shown) and is transmitted to the control unit 14 as the operating condition. In the embodiment shown in FIG. 8, the operating condition acquisition part 16 acquires the operating condition of each wind turbine 2 transmitted from the wind turbine facility 1.

The abnormality determination part 5 determines whether an abnormality is present in each of the plurality of wind turbines 2, based on the abnormality degree E of each of the wind turbines 2 calculated by the abnormality degree calculation part 4. More specifically, for each of the plurality of wind turbines 2, the abnormality degree E of the wind turbine 2 may be compared with the predetermined abnormality determination threshold C, and if the abnormality degree E is not less than the abnormality determination threshold C ($E \geq C$), it may be determined that an abnormality is present, and if the abnormality degree E is less than the abnormality determination threshold C ($E < C$), it may be determined that an abnormality is not present (normal).

If the abnormality determination part 5 determines that at least one of the plurality of wind turbines 2 has an abnormality (abnormality positive determination Ja), the first verification part 6 verifies that abnormality positive determination Ja. If there are two or more wind turbines 2 that are determined to have an abnormality (abnormality positive determination Ja), the first verification part 6 verifies the abnormality positive determination Ja of each of the two or more wind turbines 2 individually as the verification target. For the verification, as shown in FIG. 8, the first verification part 6 includes an other-result acquisition part 61 and a first validity determination part 62. The first verification part 6 sequentially or parallel verifies each abnormality positive determination Ja as follows.

The other-result acquisition part 61 acquires a determination result regarding one or more other of the plurality of wind turbines 2 based on the abnormality degree E, in a predetermined period T including a timing of acquiring the operating condition used for calculating the abnormality degree E based on which the abnormality positive determination Ja to be verified is made. That is, the acquiring timing is between the start and end of the predetermined period T. The acquiring timing may be a timing of measuring (detecting) sensor values of the sensors (not shown). For instance, the acquiring timing may be given by storing each sensor value with a time stamp indicating the measurement time or the time series of the sensor values.

The predetermined period T may be any period, preferably a period that can be evaluated that the environmental condition at the acquiring timing of the wind turbine 2 with the abnormality positive determination Ja to be currently verified is the same as the environmental condition of the other wind turbines 2. For instance, the wind condition such as wind speed acting on the wind turbine blades 2b of the wind turbine 2 may have a time lag between upstream and downstream sides along the wind direction. Further, when the temperature around the wind turbine 2 changes according to the wind condition, a time lag may occur in each wind turbine 2. By determining the predetermined period T in consideration of such a time lag, it is possible to match the acquiring timing of the abnormality degree E of the wind turbine 2 to be verified and the abnormality degree E of the other wind turbines 2.

The first validity determination part 62 determines whether the abnormality positive determination Ja being verified is valid (first validity determination), based on the number of wind turbines 2 that is determined to have an abnormality as a result of determination based on the abnormality degree E regarding the one or more other wind turbines 2 as acquired by the other-result acquisition part 61 (hereinafter, the number of abnormal wind turbines Na). The number of abnormal wind turbines Na is any number equal to or more than two. The number of abnormal wind turbines Na may be determined based on the probability that abnormalities occur in a plurality of wind turbines 2 at the same time as obtained from previous results. In other words, the validity of each abnormality positive determination Ja made by the abnormality determination part 5 is judged based on a determination result regarding the other wind turbines 2 made by the abnormality determination part 5.

Specifically, the first validity determination part 62 may determine that the abnormality positive determination Ja currently being verified is invalid if the number of abnormal wind turbines Na is less than a first verification threshold Va (Na<Va), and determines that the abnormality positive determination Ja currently being verified is valid if the number of abnormal wind turbines Na is not less than the first verification threshold Va (Na≥Va). In the embodiment shown in FIG. 8, with N being the number of the plurality of wind turbines 2, if all of the other wind turbines (N-l) are determined to have an abnormality (Va =N-1), the abnormality positive determination Ja being verified is regarded as due to an environmental factor and is determined to be invalid. It is very unlikely that all the wind turbine 2 have an abnormality at the same time. Therefore, when the validity of the abnormality positive determination Ja being verified is denied and the corresponding wind turbine 2 is determined to be normal, it is unlikely that the wind turbine 2 that is determined to be normal have an abnormality.

More specifically, in Case 1 shown in FIG. 10, the abnormality positive determination Ja of the Xth wind turbine 2 is the verification target, and all of the other N-1 wind turbines 2 are determined to have an abnormality (i.e., abnormality positive determination Ja is made) at a timing in the predetermined period T. Accordingly, in this case, the first validity determination part 62 determines that the abnormality positive determination Ja of the Xth wind turbine 2 is invalid (the Xth wind turbine 2 is determined to be normal). Conversely, in Case 2 shown in FIG. 10, the abnormality positive determination Ja of the Xth wind turbine 2 is the verification target, and all of the other N-1 wind turbines 2 are determined not to have an abnormality (i.e., not abnormality positive determination Ja but abnormality negative determination Jn is made) at a timing in the predetermined period T. Accordingly, in this case, the first validity determination part 62 determines that the abnormality positive determination Ja of the Xth wind turbine 2 is valid (the Xth wind turbine 2 is determined to be abnormal).

However, the present invention is not limited to the present embodiment. For instance, the first validity determination part 62 may determine that the abnormality positive determination Ja of the verification target is invalid if the abnormality positive determination Ja is made on a predetermined proportion, for instance, half ({N-1}/2) or more of the other wind turbines 2, or if the abnormality positive determination Ja is made on a predetermined number or more (e.g., two or more) of the other wind turbines 2.

Further, in the embodiment shown in FIG. 8, the control unit 14 further includes a first notification part 64 that notifies that an abnormality is detected if the first validity determination part 62 determines that the abnormality positive determination Ja of the verification target is valid. In other words, the first notification part 64 notifies that an abnormality is detected only if there is the abnormality positive determination Ja that is determined to be valid, and does not issue notification if none of the abnormality positive determinations Ja is determined to be valid as all of the wind turbines 2 are normal. Thus, it is possible to avoid the notification of false detection and the need for response to this notification such as inspection.

The operating state evaluation method corresponding to the process executed by the control unit 14 having the above configuration will now be described. In some embodiments, as shown in FIG. 9, the operating state evaluation method may include an abnormality degree calculation step (S92) of calculating the abnormality degree E of each of the plurality of wind turbines 2 based on the operating condition of each of the wind turbines 2, an abnormality determination step (S93) of determining whether an abnormality is present in each of the plurality of wind turbines 2 based on the abnormality degree E of each of the wind turbines 2 calculated in the abnormality degree calculation step, and a first verification step (S95) of verifying, if at least one of the plurality of wind turbines 2 is determined to have an abnormality (abnormality positive determination Ja) in the abnormality determination step (S93), verifying that abnormality positive determination Ja.

The first verification step (S95) includes an other-result acquisition step (S95a) of acquiring a determination result regarding one or more other of the plurality of wind turbines 2 based on the abnormality degree E, in a predetermined period T including a timing of acquiring the operating condition used for calculating the abnormality degree E based on which the abnormality positive determination Ja to be verified is made, and a first validity determination step (S95b) of making the first validity determination, based on the number of wind turbines 2 that are determined to be abnormal based on the abnormality degree E among the one or more other wind turbines 2.

The abnormality degree calculation step (S92), the abnormality determination step (S93), the first verification step (S95) are same as the process executed by the abnormality degree calculation part 4, the abnormality determination part 5, and the first verification part 6 (other-result acquisition part 62 and first validity determination part 62) described above, so that the details will not be described again.

In the embodiment shown in FIG. 9, the operating state evaluation method further includes a first notification step (S96b) of notifying that an abnormality is detected if the abnormality positive determination Ja is determined to be valid in the first validity determination step (S95b). The first notification step (S96b) is the same as the process executed by the first notification part 64, so that the details will not be described again.

The operating state evaluation method according to the present embodiment will be described with reference to the flowchart of FIG. 9.

In step S91, the operating condition of each of the plurality of wind turbines 2 is acquired at a predetermined timing, for instance, periodically. Then, the following steps (S91 to S98) are performed as appropriated each time step S91 is performed. In step S92, the abnormality degree calculation step is performed to calculate the abnormality degree E of each wind turbine 2. In step S93, the abnormality determination step is performed. More specifically, in the embodiment shown in FIG. 9, the abnormality degree E of each wind turbine 2 is compared with the abnormality determination threshold C, and if E≥C, the wind turbine 2 is determined to be abnormal (abnormality positive determination Ja), and if E<C, the wind turbine 2 is determined not to be abnormal (abnormality negative determination Jn). In step S94, it is determined whether there is the wind turbine 2 of E≥C. In step S94, if it is determined that there is the wind turbine 2 of E≥C, in step 95, the first verification step described above is performed for each abnormality positive determination Ja made in step S93.

More specifically, in the embodiment shown in FIG. 9, in step S95a, the other-result acquisition step is performed to acquire a determination result regarding the one or more other wind turbines 2 based on the abnormality degree E. In step S95b, the first validity determination step is performed, and if the number of abnormal wind turbines Na is less than the first verification threshold Va (Na<Va), the abnormality positive determination Ja currently being verified is determined to be valid (the corresponding wind turbine is determined to be abnormal). Then, in step S95c, identification information of the wind turbine 2 corresponding to the valid abnormality positive determination Ja is stored, followed by step S96. Conversely, in step S95b, if the number of abnormal wind turbines Na is not less than the first verification threshold Va (Na≥Va), the abnormality positive determination Ja currently being verified is determined to be invalid (the corresponding wind turbine is determined to be normal), and the method proceeds to step S96 without performing step S95c.

Then, in step S96, if there is a plurality of abnormality positive determinations Ja made in step S93, the other abnormality positive determination Ja that has not been verified is selected as the next verification target, and steps S95a to S95c are repeated. Conversely, in step S96, if verification of all abnormality positive determinations Ja is complete, in step S96b, the first notification step is performed to notify that an abnormality is detected in the wind turbine 2 corresponding to the identification information stored in the step S95c.

With the above configuration, if at least one of the plurality of wind turbines 2 is determined to have an abnormality based on the abnormality degree E calculated based on the operating condition (multiple parameter values), the validity (accuracy) of that abnormality positive determination Ja is verified based on the number of abnormality positive determinations Ja in the determination result regarding the other wind turbines 2 based on the abnormality degree E at the same timing. By ignoring the abnormality positive determination Ja that is determined to be false on the verification, it is possible to early detect a sign of an abnormality occurring in each wind turbine 2 with an increased detection sensitivity while avoiding false detection based on the abnormality degree E of each wind turbine 2. Accordingly, it is possible to prevent a reduction in operating rate due to false detection and an increase in cost.

On the other hand, as described above, if detection sensitivity is decreased by, for instance, increasing the abnormality determination threshold C to detect an abnormality of each of the plurality of wind turbines 2 based on comparison between the abnormality degree E and the abnormality determination threshold C, although false detection can be reduced, it is difficult to early detect an abnormality (sign of abnormality) before each wind turbine 2 fails. For instance, even if the abnormality degree E gradually increases due to an abnormality occurring in the wind turbine 2, if the value of the abnormality degree E is not more than the abnormality determination threshold C, an abnormality cannot be detected, and a sign of abnormality cannot be accurately obtained. Further, as abnormality detection is delayed, a risk of failure of the wind turbine 2 increases, and the operating rate of the wind turbine 2 may decrease due to the failure.

In view of this, in some embodiments, as shown in FIG. 8, the control unit 14 may further include, in addition to the abnormality degree calculation part 4 and the abnormality determination part 5, a second verification part 7 configured to, if at least one of the wind turbines 2 is determined not to have an abnormality (abnormality negative determination Jn), verify that abnormality negative determination Jn.

At this time, as shown in FIG. 8, the second verification part 7 may perform verification if the abnormality determination part 5 determines that none of the plurality of wind turbines 2 has an abnormality. If there are two or more wind turbines 2 that are determined not to have an abnormality (abnormality negative determination Jn) by the abnormality determination part 5, the second verification part 7 may verify the abnormality negative determination Jn of each of the two or more wind turbines 2 individually as the verification target. For the verification, as shown in FIG. 8, the second verification part 7 includes a statistic calculation part 71, a relationship calculation part 72, and a second validity determination part 73.

The statistic calculation part 71 calculates a statistic S of the abnormality degree E of each of the plurality of wind turbines 2. In the embodiment shown in FIG. 8, the statistic S is an average of a plurality of abnormality degrees E.

The relationship calculation part 72 calculates a relationship Sr between the abnormality degree E of each of the plurality of wind turbines 2 and the statistic S calculated by the statistic calculation part 71. In the embodiment shown in FIG. 8, the relationship Sr is a deviation between the abnormality degree E of each of the plurality of wind turbines 2 and the average of the plurality of abnormality degrees E.

The second validity determination part 73 determines whether the abnormality negative determination Jn of each of the plurality of wind turbines 2 is valid (second validity determination) based on the relationship Sr calculated by the relationship calculation part 72. More specifically, if the relationship Sr is not less than a second verification threshold Vb ($Sr \geq Vb$), the wind turbine 2 may be determined to be abnormal, and if the relationship Sr is less than the second verification threshold Vb ($Sr < Vb$), the wind turbine 2 may be determined to be normal.

The second verification threshold Vb may be set for each of the plurality of wind turbines 2, and may be set based on previous operating conditions (normal operating data) of the plurality of wind turbines 2 in a normal state. Further, the second verification threshold Vb may be set relatively low at an early stage, and the second verification threshold Vb may be changed after some normal operating data are collected. More specifically, the second verification threshold Vb may be obtained from an average and a maximum of the abnormality degrees E of the plurality of wind turbines 2 in a normal state, using a function defining a relationship of the average of the abnormality degrees E in a normal state, the maximum of the abnormality degrees E in a normal state, and the second verification threshold Vb.

In the example shown in FIG. 11, with respect to the Xth wind turbine 2, after time t1, the deviation (relationship Sr) between the abnormality degree E of the Xth wind turbine 2 and the average is not less than the second verification threshold Vb, and a relationship of $Sr \geq Vb$ is established. Accordingly, the second validity determination part 73 determines that the abnormality negative determination Jn of the Xth wind turbine 2 is invalid (the Xth wind turbine 2 is determined to be abnormal) on the verification after time t1.

In the embodiment shown in FIG. 8, the control unit 14 further includes a second notification part 74 that issues notification if the second validity determination part 73 determines that the abnormality negative determination Jn is invalid. In other words, the second notification part 74 notifies that an abnormality is detected only if the abnormality negative determination Jn made by the abnormality determination part 5 is determined to be invalid by the second validity determination part 73, and does not issue notification if all of the abnormality negative determinations Jn made by the abnormality determination part 5 are determined to be valid as all of the wind turbines 2 corresponding to the verified abnormality negative determinations Jn are normal. Thus, it is possible to more appropriately detect an abnormality.

The operating state evaluation method corresponding to the process executed by the control unit 14 having the above configuration will now be described. In some embodiments, as shown in FIG. 9, the operating state evaluation method may include the abnormality degree calculation step (S92), the abnormality determination step (S93), and a second verification step (S97) of, if at least one of the wind turbines 2 is determined not to have an abnormality (abnormality negative determination Jn), verifying that abnormality negative determination Jn.

Further, the second verification step includes a statistic calculation step (S97a) of calculating the statistic S of the abnormality degree E of each of the plurality of wind turbines 2, a relationship calculation step (S97b) of calculating the relationship Sr between the statistic calculated in the statistic calculation step (S97a) and each of the abnormality degrees E of the plurality of wind turbines 2, and a second validity determination step (S97c) of making the second validity determination, based on the relationship Sr calculated in the relationship calculation step (S97b).

The abnormality degree calculation step (S92), the abnormality determination step (S93), and the second verification step (S97) are same as the process executed by the abnormality degree calculation part 4, the abnormality determination part 5, and the second verification part 7 (statistic calculation part 71, relationship calculation part 72, and second validity determination part 73) described above, so that the details will not be described again.

In the embodiment shown in FIG. 9, the operating state evaluation method further includes a second notification step (S98) of issuing notification if the abnormality negative determination Jn is determined to be invalid in the second validity determination step (S97c). The second notification step (S98) is the same as the process executed by the second notification part 74, so that the details will not be described again.

The operating state evaluation method according to the present embodiment will be described with reference to the flowchart of FIG. 9.

Steps S91 to S94 have already been described, so that description thereof will be omitted. In step S94, if there is no wind turbine 2 that is determined to have an abnormality (abnormality positive determination Ja), the method proceeds to step S97. In other words, in the embodiment shown in FIG. 9, if all of the plurality of wind turbines 2 are determined not to have an abnormality (abnormality negative determination Jn), the method proceeds to step S97. In step S97, the second verification step is performed.

More specifically, in step S97a, the statistic calculation step is performed to calculate the statistic S of the abnormality degree E. In the embodiment shown in FIG. 9, the statistic S is an average of the abnormality degrees E of the plurality of wind turbines 2. In step S97b, the relationship calculation step (S97b) is performed to calculate the relationship Sr between the abnormality degree E of each of the plurality of wind turbines 2 and the statistic S of the abnormality degree E. In the embodiment shown in FIG. 9, the relationship Sr is a deviation between the abnormality degree E of each of the plurality of wind turbines 2 and the average of the plurality of abnormality degrees E.

Then, in step S97c, it is determined whether the relationship Sr (deviation in FIG. 9) of each abnormality degree E is not less than the second verification threshold Vb. In step S97, if $Sr \geq Vb$, the abnormality negative determination Jn made in step S92 is determined to be invalid (the corresponding wind turbine is determined to be abnormal). Then, in step S97d, identification information of the wind turbine 2 corresponding to the abnormality degree E of $Sr \geq Vb$ is stored, followed by step S98. Conversely, if $Sr < Vb$, the abnormality negative determination Jn made in step S93 is determined to be valid, and the method proceeds to step S98 without performing step S97d. Then, in step S98, the second notification step is performed to notify that an abnormality is detected in the wind turbine 2 corresponding to the identification information stored in the step S97d.

With the above configuration, if at least one of the plurality of wind turbines 2 is determined not to have an abnormality based on the abnormality degree E calculated based on the operating condition (multiple parameter values), the validity (accuracy) of that abnormality negative determination Jn is verified based on the statistic S calculated from the plurality of abnormality degrees E at the same timing. Thus, even if the abnormality degree E is not more than the abnormality determination threshold C, it is possible to early detect an abnormality, and it is possible to prevent a reduction in operating rate due to failure of the wind turbine 2 and an increase in cost.

However, the present invention is not limited to the above described embodiments. In some embodiments, the abnormality determination part 5 may not be provided, and abnormality detection (notification) of the wind turbine 2 on which the abnormality positive determination Ja is made may be performed based on the relationship between the abnormality degree E of each of the plurality of wind turbines 2 and the statistic S of the abnormality degree E, without determination based on comparison between the abnormality degree E calculated by the abnormality degree calculation part 4 and the abnormality determination threshold C.

Moreover, although in the embodiment shown in FIG. 9, in step S94, the method proceeds to the first verification step (S95) if there is the abnormality positive determination Ja, while the method proceeds to the second verification step (S97) if there is no abnormality positive determination Ja, in some embodiments, if there are both the abnormality positive determination Ja and the abnormality negative determination Jn, both the second verification step (S95) and the second verification step (S97) may be performed sequentially or parallel.

Industrial Applicability

At least one embodiment of the present invention can be applied to a method and a device for evaluating an operating state of a wind turbine facility.

**Claims**

1. A method for evaluating an operating state of a wind turbine facility (1) including at least one wind turbine (2), comprising:

   a step of acquiring at least one of an output power of the wind turbine, an ambient temperature, a temperature in a specific location, and operating information as an operating condition of the wind turbine facility (1) or the at least one wind turbine (2);

a step of calculating an estimated value of a temperature of a bearing rotatably supporting a rotor of the at least one wind turbine (2) as a physical quantity measurable on the at least one wind turbine (2) and corresponding to the operating condition;

a step of acquiring an actual value corresponding to the physical quantity; and

a step of determining whether an abnormality is present in the at least one wind turbine (2) by comparing the estimated value and the actual value, and

in the step of calculating the estimated value, the operating condition as an input parameter is input to a physical model (30) simulating the wind turbine facility (1) or the at least one wind turbine (2) as an estimation target based on its physical characteristics or a machine learning model calculating the estimated value corresponding to the operating condition by repeatedly learning a relationship between the operating condition and the estimated value using a predetermined algorithm to obtain the estimated value as an output parameter of the physical model (30) or the machine learning model.

2. The method according to claim 1,

    wherein the at least one wind turbine (2) includes a plurality of wind turbines, and
    wherein the operating condition is obtained by averaging parameters acquired from each of the plurality of wind turbines.

3. The method according to claim 1 or 2,
   wherein a difference between the estimated value and the actual value is calculated, and it is determined whether an abnormality is present based on whether the difference exceeds a threshold.

4. The method according to any one of claims 1 to 3,

    wherein the at least one wind turbine (2) includes a plurality of wind turbines, and
    wherein the method includes a step of identifying a wind turbine (2) having an abnormality by comparison in behavior of the actual value with respect to the operating condition among the plurality of wind turbines.

5. The method according to claim 4,
   wherein a correlation coefficient between the estimated value and the actual value is obtained for each of the plurality of wind turbines, and a wind turbine (2) whose correlation coefficient exceeds a threshold is determined to have an abnormality.

6. The method according to any one of claims 1 to 5,

wherein the at least one wind turbine (2) includes a plurality of wind turbines,
wherein the method further includes:

    a step of calculating an abnormality degree of each of the plurality of wind turbines, based on the operating condition of each of the wind turbines;
    a step of determining whether an abnormality is present in each of the plurality of wind turbines, based on the abnormality degree of each of the wind turbines, and
    a step of, if at least one of the plurality of wind turbines is determined to have an abnormality, verifying an abnormality positive determination that the at least one of the plurality of wind turbines has the abnormality, and

wherein the step of verifying the abnormality positive determination includes:

    a step of acquiring a determination result regarding one or more other of the plurality of wind turbines based on the abnormality degree, in a predetermined period including a timing of acquiring the operating condition used for calculating the abnormality degree based on which the abnormality positive determination is made, and
    a step of making a first validity determination whether the abnormality positive determination is valid, based on the number of wind turbines that are determined to be abnormal based on the abnormality degree among the one or more other of the plurality of wind turbines.

7. The method according to claim 6,
   wherein the step of making the first validity determination includes determining that the abnormality positive determination is invalid if the number is less than a first verification threshold, and determining that the abnormality positive determination is valid if the number is not less than the first verification threshold.

8. The method according to claim 6 or 7, further comprising a step of notifying that the abnormality is detected if the abnormality positive determination is determined to be valid.

9. The method according to any one of claims 1 to 8,

    wherein the at least one wind turbine (2) includes a plurality of wind turbines,
    wherein the method further includes:

a step of calculating an abnormality degree of each of the plurality of wind turbines, based on the operating condition of each of the wind turbines;

a step of determining whether an abnormality is present in each of the plurality of wind turbines, based on the abnormality degree of each of the wind turbines, and

a step of, if at least one of the plurality of wind turbines is determined not to have an abnormality, verifying an abnormality negative determination that the at least one of the plurality of wind turbines does not have an abnormality, and

wherein the step of verifying the abnormality negative determination includes:

a step of calculating a statistic of the abnormality degree of each of the plurality of wind turbines;

a step of calculating a relationship between the abnormality degree of each of the plurality of wind turbines and the statistic; and

a step of a making a second validity determination whether the abnormality negative determination is valid for each of the wind turbines, based on the relationship.

10. The method according to claim 9, further comprising a step of issuing notification if the abnormality negative determination is determined to be invalid.

11. A device for evaluating an operating state of a wind turbine facility (1) including at least one wind turbine (2), the device comprising:

an operating condition acquisition part (16) configured to acquire at least one of an output power of the wind turbine, an ambient temperature, a temperature in a specific location, and operating information as an operating condition of the wind turbine facility (1) or the at least one wind turbine (2);

an estimated value calculation part (18) configured to calculate an estimated value of a temperature of a bearing rotatably supporting a rotor of the at least one wind turbine (2) as a physical quantity measurable on the at least one wind turbine (2) and corresponding to the operating condition;

an actual value acquisition part (20) configured to acquire an actual value corresponding to the physical quantity; and

a determination part (22) configured to determine whether an abnormality is present in the at least one wind turbine (2) by comparison between the estimated value and the actual value,

**characterized in that**

the estimated value calculation part (18) is configured to input the operating condition as an input parameter to a physical model (30) simulating the wind turbine facility (1) or the at least one wind turbine (2) as an estimation target based on its physical characteristics or a machine learning model calculating the estimated value corresponding to the operating condition by repeatedly learning a relationship between the operating condition and the estimated value using a predetermined algorithm so as to obtain the estimated value as an output parameter of the physical model (30) or the machine learning model.

**Patentansprüche**

1. Ein Verfahren zum Auswerten eines Betriebszustands einer Windturbinenanlage (1) mit mindestens einer Windturbine (2), aufweisend:

einen Schritt zum Erfassen mindestens eines von einer Ausgangsleistung der Windturbine, einer Umgebungstemperatur, einer Temperatur an einem bestimmten Ort und Betriebsinformationen als eine Betriebsbedingung der Windturbinenanlage (1) oder der mindestens einen Windturbine (2) ;

einen Schritt zum Berechnen eines geschätzten Werts einer Temperatur eines Lagers, das einen Rotor der mindestens einen Windturbine (2) drehbar trägt, als eine physikalische Größe, die an der mindestens einen Windturbine (2) messbar ist und zu der Betriebsbedingung korrespondiert;

einen Schritt zum Akquirieren eines tatsächlichen Werts, der zu der physikalischen Größe korrespondiert; und

einen Schritt zum Bestimmen, ob eine Abnormalität in der mindestens einen Windturbine (2) vorliegt, indem der geschätzte Wert und der tatsächliche Wert verglichen werden, und

in dem Schritt zum Berechnen des geschätzten Werts die Betriebsbedingung als ein Eingangsparameter in ein physikalisches Modell (30) eingegeben wird, das die Windturbinenanlage (1) oder die mindestens eine Windturbine (2) als ein Schätzungsziel basierend auf ihrer physikalischen Eigenschaften simuliert, oder in ein maschinelles Lernmodell, das den geschätzten Wert, der zu dem Betriebszustand korrespondiert, durch wiederholtes Lernen einer Beziehung zwischen der Betriebsbedingung und dem geschätzten Wert unter Verwendung eines vorbestimmten Algorithmus berechnet, um den geschätzten Wert als einen Ausgangsparameter des physikalischen Modells (30) oder des maschinellen Lernmodells zu erhalten.

2. Das Verfahren nach Anspruch 1,

   wobei die mindestens eine Windturbine (2) eine Vielzahl von Windturbinen umfasst, und
   wobei die Betriebsbedingung durch Mittelwertbildung von Parametern erhalten wird, die von jeder der Vielzahl von Windturbinen akquiriert werden.

3. Das Verfahren nach Anspruch 1 oder 2, wobei eine Differenz zwischen dem geschätzten Wert und dem tatsächlichen Wert berechnet wird und bestimmt wird, ob eine Abnormalität vorliegt, basierend darauf, ob die Differenz einen Schwellenwert überschreitet.

4. Das Verfahren nach einem der Ansprüche 1 bis 3,

   wobei die mindestens eine Windturbine (2) eine Vielzahl von Windturbinen umfasst, und
   wobei das Verfahren einen Schritt zum Identifizieren einer Windturbine (2) mit einer Abnormalität durch Vergleich des Verhaltens des tatsächlichen Werts in Bezug auf die Betriebsbedingung unter der Vielzahl von Windturbinen umfasst.

5. Das Verfahren nach Anspruch 4, wobei ein Korrelationskoeffizient zwischen dem geschätzten Wert und dem tatsächlichen Wert für jede der Vielzahl von Windturbinen erhalten wird, und eine Windturbine (2), deren Korrelationskoeffizient einen Schwellenwert überschreitet, als abnormal bestimmt wird.

6. Das Verfahren nach einem der Ansprüche 1 bis 5,

   wobei die mindestens eine Windturbine (2) eine Vielzahl von Windturbinen umfasst,
   wobei das Verfahren ferner umfasst:

   einen Schritt zum Berechnen eines Abnormalitätsgrads jeder der Vielzahl von Windturbinen, basierend auf der Betriebsbedingung jeder der Windturbinen;
   einen Schritt zum Bestimmen, ob eine Abnormalität in jeder der Vielzahl von Windturbinen vorhanden ist, basierend auf dem Abnormalitätsgrad jeder der Windturbinen, und
   einen Schritt zum, falls bestimmt wird, dass mindestens eine der Vielzahl von Windturbinen eine Abnormalität aufweist, Verifizieren einer positiven Bestimmung einer Abnormalität, dass die mindestens eine der Vielzahl von Windturbinen die Abnormalität aufweist, und

wobei der Schritt zum Verifizieren der positiven Bestimmung der Abnormalität umfasst:

   einen Schritt zum Akquirieren eines Bestimmungsergebnisses in Bezug auf eine oder mehrere andere der Vielzahl von Windturbinen basierend auf dem Abnormalitätsgrad in einer vorbestimmten Zeitspanne, die einen Zeitpunkt zum Akquirieren der Betriebsbedingung umfasst, die zum Berechnen des Abnormalitätsgrads verwendet wird, basierend auf der die positive Bestimmung der Abnormalität vorgenommen wird, und
   einen Schritt zum Durchführen einer ersten Gültigkeitsbestimmung, ob die positive Bestimmung der Abnormalität gültig ist, basierend auf der Anzahl an Windturbinen, die basierend auf dem Abnormalitätsgrad als abnormal bestimmt werden, unter der einen oder mehreren anderen der Vielzahl von Windturbinen.

7. Das Verfahren nach Anspruch 6, wobei der Schritt zum Durchführen der ersten Gültigkeitsbestimmung ein Bestimmen umfasst, dass die positive Bestimmung der Abnormalität ungültig ist, falls die Anzahl kleiner als ein erster Verifikationsschwellenwert ist, und ein Bestimmen, dass die positive Bestimmung der Abnormalität gültig ist, falls die Anzahl nicht kleiner als der erste Verifikationsschwellenwert ist.

8. Das Verfahren nach Anspruch 6 oder 7, ferner mit einem Schritt zum Mitteilen, dass die Abnormalität erfasst wird, falls die positive Bestimmung der Abnormalität als gültig bestimmt wird.

9. Das Verfahren nach einem der Ansprüche 1 bis 8,

   wobei die mindestens eine Windturbine (2) eine Vielzahl von Windturbinen umfasst,
   wobei das Verfahren ferner umfasst:

   einen Schritt zum Berechnen eines Abnormalitätsgrads jeder der Vielzahl von Windturbinen, basierend auf der Betriebsbedingung jeder der Windturbinen;
   einen Schritt zum Bestimmen, ob eine Abnormalität in jeder der Vielzahl von Windturbinen vorhanden ist, basierend auf dem Abnormalitätsgrad jeder der Windturbinen, und
   einen Schritt zum, falls bestimmt wird, dass mindestens eine der Vielzahl von Windturbinen keine Abnormalität aufweist, Verifizieren einer negativen Bestimmung der Abnormalität, dass die mindestens eine der Vielzahl von Windturbinen keine Abnormalität aufweist, und

wobei der Schritt zum Verifizieren der negativen Bestimmung der Abnormalität umfasst:

einen Schritt zum Berechnen einer Statistik des Abnormitätsgrads jeder der Vielzahl von Windturbinen;
einen Schritt zum Berechnen einer Beziehung zwischen dem Abnormalitätsgrad jeder der Vielzahl von Windturbinen und der Statistik; und
einen Schritt zum Durchführen einer zweiten Gültigkeitsbestimmung, ob die negative Bestimmung der Abnormalität für jede der Windturbinen gültig ist, basierend auf der Beziehung.

10. Das Verfahren nach Anspruch 9, ferner mit einem Schritt zum Ausgeben einer Benachrichtigung, falls bestimmt wird, dass die Bestimmung der negativen Abnormalität ungültig ist.

11. Eine Vorrichtung zum Auswerten eines Betriebszustands einer Windturbinenanlage (1) mit mindestens einer Windturbine (2), wobei die Vorrichtung aufweist:

einen Betriebsbedingungsakquirierungsteil (16), der konfiguriert ist, um mindestens eines von einer Ausgangsleistung der Windturbine, einer Umgebungstemperatur, einer Temperatur an einem bestimmten Ort und Betriebsinformationen als eine Betriebsbedingung der Windturbinenanlage (1) oder der mindestens einen Windturbine (2) zu akquirieren;
einen Schätzwert-Berechnungsteil (18), der konfiguriert ist, um einen geschätzten Wert einer Temperatur eines Lagers, das einen Rotor der mindestens einen Windturbine (2) drehbar trägt, als eine physikalische Größe zu berechnen, die an der mindestens einen Windturbine (2) messbar ist und zu dem Betriebszustand korrespondiert;
ein Istwert-Akquirierungsteil (20), das konfiguriert ist, um einen zu der physikalischen Größe korrespondierenden tatsächlichen Wert zu akquirieren; und
einen Bestimmungsteil (22), der konfiguriert ist, um durch Vergleich zwischen dem geschätzten Wert und dem tatsächlichen Wert zu bestimmen, ob in der mindestens einen Windturbine (2) eine Abnormalität vorliegt,

**dadurch gekennzeichnet, dass**
der Schätzwert-Berechnungsteil (18) konfiguriert ist, um die Betriebsbedingung als einen Eingangsparameter in ein physikalisches Modell (30) einzugeben, das die Windturbinenanlage (1) oder die mindestens eine Windturbine (2) als ein Schätzungsziel basierend auf ihrer physikalischen Eigenschaften simuliert, oder in ein maschinelles Lernmodell, das den zu der Betriebsbedingung korrespondierenden geschätzten Wert durch wiederholtes Lernen einer Beziehung zwischen der Betriebsbedingung und dem geschätzten Wert unter Verwendung eines vorbestimmten Algorithmus berechnet, um den geschätzten Wert als einen Ausgangsparameter des physikalischen Modells (30) oder des maschinellen Lernmodells zu erhalten.

**Revendications**

1. Procédé d'évaluation d'un état de fonctionnement d'une installation d'éoliennes (1) comprenant au moins une éolienne (2), comprenant :

une étape d'acquisition d'au moins l'une parmi une puissance de sortie de l'éolienne, une température ambiante, une température à un emplacement spécifique, et des informations de fonctionnement en tant qu'un état de fonctionnement de l'installation d'éoliennes (1) ou de l'au moins une éolienne (2) ;
une étape de calcul d'une valeur estimée d'une température d'un palier supportant en rotation un rotor de l'au moins une éolienne (2) en tant qu'une quantité physique mesurable sur l'au moins une éolienne (2) et correspondant à l'état de fonctionnement ;
une étape d'acquisition d'une valeur réelle correspondant à la quantité physique ; et
une étape de détermination si une anomalie est ou non présente dans l'au moins une éolienne (2) par la comparaison de la valeur estimée et de la valeur réelle,
et
à l'étape de calcul de la valeur estimée, l'état de fonctionnement en tant qu'un paramètre d'entrée est entré dans un modèle physique (30) simulant l'installation d'éoliennes (1) ou l'au moins une éolienne (2) en tant qu'une cible d'estimation sur la base de ses caractéristiques physiques ou dans un modèle d'apprentissage automatique calculant la valeur estimée correspondant à l'état de fonctionnement par l'apprentissage répétitif d'une relation entre l'état de fonctionnement et la valeur estimée en utilisant un algorithme prédéterminé pour obtenir la valeur estimée en tant qu'un paramètre de sortie du modèle physique (30) ou du modèle d'apprentissage automatique.

2. Procédé selon la revendication 1,

dans lequel l'au moins une éolienne (2) comprend une pluralité d'éoliennes, et
dans lequel l'état de fonctionnement est obtenu par le calcul d'une moyenne de paramètre acquis depuis chacune de la pluralité d'éoliennes.

3. Procédé selon la revendication 1 ou 2,
dans lequel une différence entre la valeur estimée et la valeur réelle est calculée, et il est déterminé si une anomalie est ou non présente selon que la différence dépasse ou non un seuil.

4. Procédé selon l'une quelconque des revendications 1 à 3,

dans lequel l'au moins une éolienne (2) comprend une pluralité d'éoliennes, et
le procédé comprenant une étape d'identification d'une éolienne (2) ayant une anomalie par la comparaison d'un comportement de la valeur réelle par rapport à l'état de fonctionnement parmi la pluralité d'éoliennes.

5. Procédé selon la revendication 4,
dans lequel un coefficient de corrélation entre la valeur estimée et la valeur réelle est obtenu pour chacune de la pluralité d'éoliennes, et une éolienne (2) dont un coefficient de corrélation dépasse un seuil est déterminée comme ayant une anomalie.

6. Procédé selon l'une quelconque des revendications 1 à 5,

dans lequel l'au moins une éolienne (2) comprend une pluralité d'éoliennes,
le procédé comprenant en outre :

une étape de calcul d'un degré d'anomalie de chacune de la pluralité d'éoliennes, sur la base de l'état de fonctionnement de chacune des éoliennes ;
une étape de détermination si une anomalie est ou non présente dans chacune de la pluralité d'éoliennes, sur la base du degré d'anomalie de chacune des éoliennes, et
une étape de, si au moins l'une de la pluralité d'éoliennes est déterminée comme ayant une anomalie, vérification d'une détermination positive d'anomalie que l'au moins une de la pluralité d'éoliennes a l'anomalie, et

dans lequel l'étape de vérification de la détermination positive d'anomalie comprend :

une étape d'acquisition d'un résultat de détermination concernant une ou plusieurs autres de la pluralité d'éoliennes sur la base du degré d'anomalie, dans une période prédéterminée comprenant une temporisation d'acquisition de l'état de fonctionnement utilisé pour calculer le degré d'anomalie sur la base duquel la détermination positive d'anomalie est réalisée, et
une étape de réalisation d'une première détermination de validité quant à savoir si la détermination positive d'anomalie est ou non valable, sur la base du nombre d'éoliennes qui sont déterminées comme étant anormales d'après le degré d'anomalie parmi les une ou plusieurs autre de la pluralité d'éoliennes.

7. Procédé selon la revendication 6,
dans lequel l'étape de réalisation de la première détermination de validité comprend la détermination que la détermination positive d'anomalie n'est pas valable si le nombre est inférieur à un premier seuil de vérification, et la détermination que la détermination positive d'anomalie est valable si le nombre n'est pas inférieur au premier seuil de vérification.

8. Procédé selon la revendication 6 ou 7, comprenant en outre une étape de notification que l'anomalie est détectée si la détermination positive d'anomalie est déterminée comme étant valable.

9. Procédé selon l'une quelconque des revendications 1 à 8,

dans lequel l'au moins une éolienne (2) comprend une pluralité d'éoliennes,
le procédé comprenant en outre :

une étape de calcul d'un degré d'anomalie de chacune de la pluralité d'éoliennes, sur la base de l'état de fonctionnement de chacune des éoliennes ;
une étape de détermination si une anomalie est ou non présente dans chacune de la pluralité d'éoliennes, sur la base du degré d'anomalie de chacune des éoliennes, et
une étape de, si au moins l'une de la pluralité d'éoliennes est déterminée comme n'ayant pas une anomalie, vérification d'une détermination négative d'anomalie que l'au moins une de la pluralité d'éoliennes n'a pas une anomalie, et

dans lequel l'étape de vérification de la détermination négative d'anomalie comprend :

une étape de calcul d'une statistique du degré d'anomalie de chacune de la pluralité d'éoliennes ;

une étape de calcul d'une relation entre le degré d'anomalie de chacune de la pluralité d'éoliennes et la statistique ; et

une étape de réalisation d'une deuxième détermination de validité si la détermination négative d'anomalie est ou non valable pour chacune des éoliennes, sur la base de la relation.

10. Procédé selon la revendication 9, comprenant en outre une étape d'émission de notification si la détermination négative d'anomalie est déterminée comme n'étant pas valable.

11. Dispositif d'évaluation d'un état de fonctionnement d'une installation d'éoliennes (1) comprenant au moins une éolienne (2), le dispositif comprenant :

une partie d'acquisition d'état de fonctionnement (16) configurée pour acquérir au moins l'une parmi une puissance de sortie de l'éolienne, une température ambiante, une température à un emplacement spécifique, et des informations de fonctionnement en tant qu'un état de fonctionnement de l'installation d'éoliennes (1) ou de l'au moins une éolienne (2) ;

une partie de calcul de valeur estimée (18) configurée pour calculer une valeur estimée d'une température d'un palier supportant en rotation un rotor de l'au moins une éolienne (2) en tant qu'une quantité physique mesurable sur l'au moins une éolienne (2) et correspondant à l'état de fonctionnement ;

une partie d'acquisition de valeur réelle (20) configurée pour acquérir une valeur réelle correspondant à la quantité physique ; et

une partie de détermination (22) configurée pour déterminer si une anomalie est ou non présente dans l'au moins une éolienne (2) par la comparaison entre la valeur estimée et la valeur réelle, **caractérisé en ce que**

la partie de calcul de valeur estimée (18) est configurée pour entrer l'état de fonctionnement en tant qu'un paramètre d'entrée dans un modèle physique (30) simulant l'installation d'éoliennes (1) ou l'au moins une éolienne (2) en tant qu'une cible d'estimation sur la base de ses caractéristiques physiques ou dans un modèle d'apprentissage automatique calculant la valeur estimée correspondant à l'état de fonctionnement par l'apprentissage répétitif d'une relation entre l'état de fonctionnement et la valeur estimée en utilisant un algorithme prédéterminé de manière à obtenir la valeur estimée en tant qu'un paramètre de sortie du modèle physique (30) ou du modèle d'apprentissage automatique.

FIG. 1

FIG. 2A

FIG. 2B

# FIG. 3

Operating condition
acquisition part ~16

Input from each unit
· Wind turbine output
· Ambient temperature
· Temperature at other
   measurement points
· Operating information

Estimated value
calculation part

Physical model
Machine
learning model

Statistical
processing logic

Estimated value

Actual temperature
acquisition part

Actual value

Determination part ~22

Output part ~24

# FIG. 4

```
        ( Start )
            │
            ▼
┌─────────────────────────┐
│ Acquire operating condition │ ──～ S1
└─────────────────────────┘
            │
            ▼
┌─────────────────────────┐
│  Calculate estimated value  │ ──～ S2
└─────────────────────────┘
            │
            ▼
┌─────────────────────────┐
│    Acquire actual value     │ ──～ S3
└─────────────────────────┘
            │
            ▼
┌─────────────────────────┐
│   Compare and evaluate      │
│      estimated value        │ ──～ S4
│     and actual value        │
└─────────────────────────┘
            │
            ▼
┌─────────────────────────┐
│   Output evaluation result  │ ──～ S5
└─────────────────────────┘
            │
            ▼
         ( End )
```

# FIG. 5

34

30

36    32    $T_{mb}$    8    2

Cooler    Bearing

$T_{bt}$

38

# FIG. 6

# FIG. 7

# FIG. 8

# FIG. 9

Start

S91
Acquire operating condition
of each of wind turbines 2

S92
Calculate abnormality degree E
of each wind turbine 2

S93
Determine wind turbine of $E \geq C$
to be abnormal

S94
Wind turbine 2
with abnormality positive
determination Ja
exists?

NO

YES

S95

S95a
Acquire determination result based on
abnormality degree E in predetermined
period regarding wind turbines 2 other than
wind turbine 2 with abnormality
positive determination Ja

S95b
Is the number of
abnormal wind turbines Na of
the other wind turbines 2 smaller
than first verification
threshold Va
(Na<Va)?

YES

NO

S95c
Store identification information of wind
turbine 2 corresponding to verified
abnormality positive determination Ja

S96
Is verification of
all abnormality positive
determinations Ja
complete?

YES

NO

S97

S97a
Calculate average of
all abnormality degrees E

S97b
Calculate deviation (Sr) between
abnormality degree E of each wind turbine 2
and average (S) of abnormality degrees E

S97c
Is deviation (Sr) of
each abnormality degree E
not less than second
verification threshold Vb
(Sr≥Vb)?

NO

YES

S97d
Store identification information
of wind turbine 2 of Sr≥Vb

Notify detection of abnormality of wind turbine
corresponding to stored identification information

S96b/S98

End

28

# FIG. 10

Abnormality degree E

(Case 1)    (Case 2)

Wind turbine 1  C

time

Wind turbine 2  C

time

Wind turbine X  C

time

Wind turbine N  C

time

Normal
(Wind turbine X)

Abnormal
(Wind turbine X)

# FIG. 11

Abnormality degree E of Xth wind turbine 2

vb

t1    time

Average of abnormality degrees E ⇩

Abnormal

**EP 3 696 405 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010159710 A
- US 2010179773 A1
- US 2010138182 A1
- WO 2009016020 A1
- EP 3252556 A2